Europäisches Patentamt

(19) **European Patent Office**

**Office européen des brevets**

(11) Numéro de publication: **0 022 706**
**B1**

(12) **FASCICULE DE BREVET EUROPEEN**

(45) Date de publication du fascicule du brevet:
**09.11.83**

(51) Int. Cl.³: **B 29 H 21/04**

(21) Numéro de dépôt: **80401009.8**

(22) Date de dépôt: **03.07.80**

(54) **Agent pour le moulage des objets en caoutchouc.**

(30) Priorité: **05.07.79 FR 7917703**

(43) Date de publication de la demande:
**21.01.81 Bulletin 81/3**

(45) Mention de la délivrance du brevet:
**09.11.83 Bulletin 83/45**

(84) Etats contractants désignés:
**BE DE GB IT**

(56) Documents cités:
**DE - A - 2 229 021**
**FR - A - 1 449 065**
**FR - A - 2 195 321**
**FR - A - 2 231 693**
**FR - A - 2 319 662**
**FR - A - 2 340 967**
**US - A - 4 039 143**
**US - A - 4 043 924**

(73) Titulaire: **PNEUMATIQUES, CAOUTCHOUC,**
**MANUFACTURE ET PLASTIQUES KLEBER-COLOMBES**
**Société anonyme dite:, Place de Valmy,**
**F-92700 Colombes (FR)**

(72) Inventeur: **Chambrion, Pierre, 8, rue Nordmann,**
**F-92250 La Garenne Colombes (FR)**
Inventeur: **Mathieu, Pierre, 1, rue Gérard de Nerval,**
**F-78190 Montigny le Bretonneux (FR)**

BUNDESDRUCKEREI BERLIN

## Agent pour le moulage des objets en caoutchouc

L'invention est relative à la fabrication des objets en caoutchouc obtenus par moulage et vulcanisation sous pression dans un moule donnant la forme et l'état de surface désirés.

Dans ce domaine, il est bien connu de déposer sur la surface de l'ébauche en caoutchouc cru, des agents favorisant le moulage et évitant les défauts superficiels. L'usage de ces agents est plus spécialement nécessaire lorsque les objets présentent des formes complexes et très découpées, comme par exemple les sculptures des bandes de roulement des pneumatiques. En effet, dans ces cas, le caoutchouc doit chasser l'air de toutes les cavités du moule afin de les remplir complètement puis l'objet moulé doit pouvoir être démoulé sans arrachement des éléments les plus finement sculptés du dessin imprimé par le moule.

L'évacuation de l'air refoulé des cavités du moule par le caoutchouc se fait par des évents judicieusement disposés et par les plans de joints des éléments du moule. Cependant les trous d'évents produisent des bavures qu'il faut enlever de l'objet moulé. On a donc intérêt à limiter le plus possible le nombre des évents et l'une des propriétés exigée de l'agent de moulage est de permettre ou de favoriser l'évacuation de l'air vers les évents. Une autre propriété demandée à l'agent du moulage est de donner à l'objet en caoutchouc un état de surface plaisant, généralement ni trop mat ni trop brillant. En particulier l'agent ne doit pas laisser des traces ou des voiles grisâtres qui non seulement seraient inesthétiques mais qui pourraient encore masquer ou altérer la visibilité des marques ou des inscriptions utiles à l'identification des objets. Or les agents de moulage connus, au moins ceux qui sont pulvérisés sur les ébauches prêtes à mouler, contiennent généralement des pigments minéraux opaques tels que le noir de carbone, du talc, du mica, en suspension dans un véhicule liquide acqueux ou solvant hydrocarbure. Ils ont donc un pouvoir couvrant relativement élevé et subsistent après le moulage sur les objets finis.

Il est bien connu aussi, par le brevet FR-A-1 449 065 que l'on peut utiliser un agent de démoulage que l'on projette sur les parois du moule, comportant des microsphères de verre. Cependant, l'effet anti-collant recherché n'est pas apporté par les billes de verre mais par l'emploi d'un produit à base de silicone, les billes de verre étant destinées à jouer un rôle d'abrasif pour diminuer la fréquence des nettoyages des moules.

L'invention a pour objet un agent pour l'enduction avant moulage de la surface des objets en caoutchouc à vulcaniser sous pression, du type comprenant un liquide support volatile véhiculant un pigment minéral en suspension avec éventuellement un ou plusieurs produits complémentaires tel que mouillant, régulateur de viscosité, caractérisé en ce que le pigment minéral est constitué de micro-billes de verre à raison de 5 à 15 parties en poids pour 100 parties de support volatile, ces micro billes de verre présentant une granulomètrie de 10 à 200 microns.

Dans l'invention proposée, contrairement au brevet FR-A-1 449 065, les microsphères de verre sont déposées sur l'objet à mouler par l'évaporation du solvant volatile et, par effet mécanique de rugosité en surface de l'objet, elles permettent l'évacuation de l'air inclus dans les cavités évitant ainsi tous les défauts de surface habituel, sans nécessiter l'utilisation de silicones.

Par micro billes de verre, on désigne des sphères de verres pleines ou creuses présentant une granulomètrie de 10 à 200 microns et par exemple de 20 à 70 microns. Des billes de verre du type de celles utilisées pour le nettoyage des pièces par »sablage« conviennent à cette application. Ces billes sont mises en suspension dans la phase liquide présentant la viscosité désirée et la mixture est déposée sur la surface des objets à mouler en caoutchouc cru, par exemple par pulvérisation. L'évaporation de la phase liquide laisse à la surface des objets une mince pellicule comprenant des billes de verre. Après moulage, les objets sortent du moule avec une régularité et un fini de forme parfaitement satisfaisant, ce qui est le signe de l'efficacité de cette mixture à favoriser le drainage de l'air des cavités vers les évents ou joints du moule pendant le moulage. En outre les objets présentent un état de surface impeccable, sans trace ni voile grisâtre ou opaque altérant ou dissimulant les marques ou indications superficielles venus de moulage ou imprimées avant moulage. Un examen au microscope de la surface des objets moulés révèle que les microbilles de verre ont pour la plupart pénétré à une faible profondeur dans le caoutchouc au lieu de rester en surface comme les autres pigments habituels. On pense que la forme sphérique du micro billes peut favoriser cette absorption superficielle dont l'avantage est de rendre la mixture pratiquement invisible après moulage et de ne pas perturber sensiblement les propriétés de la surface de l'objet moulé.

A titre indicatif on donne ci-dessous un exemple de composition de la mixture selon l'invention (parties en poids)

| | | |
|---|---|---|
| — | solvant volatile tel qu'essence de pétrole | 100 parties |
| — | micro bille de verre 20/70 | 5 à 15 parties |
| — | agent mouillant | 0,1 |
| — | épaississant (silice pyrogénée) | 2 à 5 parties |
| — | lubrifiant (polypropylène glycol) | 1 à 5 parties |

Les teneurs en billes de verre et un épaississant sont ajustées en relation l'une avec l'autre. La viscosité de la mixture est de préférence rendue juste suffisante pour maintenir les billes de verre en suspension avec une répartition assez homogène pour l'emploi. La concentration en billes de verre peut aussi varier selon les types de pièces en caoutchouc à traiter mais il est plus souvent préférable de déposer sur les pièces à traiter un plus grand nombre de couches de mixture à faible concentration plutôt qu'une seule couche plus concentrée.

Dans la composition indiquée plus haut l'épaississant est un agent thixotrope qui augmente la viscosité du milieu pour maintenir les billes en suspension et éviter le coulage pendant l'application. Le lubrifiant joue en outre le rôle de liant pour maintenir les pigments sur la surface de l'objet en caoutchouc en attente de moulage.

Cette mixture est déposée par pulvérisation sur les objets en caoutchouc cru sur lesquels elle forme après évaporation du solvant une pellicule grisâtre assez claire comprenant les billes de verre adherant à la surface des objets.

Au cours des essais effectués ayant donné de bons résultats on a pu estimer que la pellicule ainsi déposée à la surface des objets en caoutchouc comprenait de l'ordre de 4 grammes de billes par mètre carré de surface recouverte, soit encore de 1000 à 3000 micro billes par centimètre carré de surface. Il s'agit là d'une indication approximative et cette répartition superficielle des billes pourra varier dans d'autres cas d'espèce, par exemple selon la sculpture imprimée par le moule est plus ou moins fine ou tourmentée.

**Revendications**

1. Agent pour l'enduction avant moulage de la surface des objets en caoutchouc à vulcaniser sous pression, du type comprenant un liquide support volatile véhiculant un pigment minéral en suspension avec éventuellement un ou plusieurs produits complémentaires tel que mouillant, régulateur de viscosité, caract érisé en ce que le pigment minéral est constitué de micro billes de verre à raison de 5 à 15 parties en poids pour 100 parties de support volatile, ces micro billes de verre présentant une granulomètrie de 10 à 200 microns.

2. Agent de moulage selon la revendication 1 et comprenant en outre de 1 à 5 parties d'un agent lubrifiant compatible tel que du polypropylène glycol.

3. Objet en caoutchouc vulcanisé sous pression dans un moule après application de l'agent de moulage selon la revendication 1 ou 2 et dans lequel 1000 à 3000 micro billes de l'agent de moulage sont incrustées ou absorbées superficiellement par centimètre carré de surface de l'objet enduit avec cet agent de moulage.

**Patentansprüche**

1. Mittel zum vor dem Formen erfolgenden Beschichten der Oberfläche von unter Druck zu vulkanisierenden Kautschukgegenständen mit einer flüchtigen Trägerflüssigkeit, die ein mineralisches Pigment in Suspension mit ggfls. einem oder mehreren zusätzlichen Stoffen wie z. B. einem Netzmittel oder einem Viskoseregler enthält, dadurch gekennzeichnet, daß das mineralische Pigment zu ungefähr 5 bis 15 Gewichtsanteilen des Mittels aus Mikroglaskugeln einer Korngröße von ca. 10 bis 200 μm besteht.

2. Formmittel nach Anspruch 1, das außerdem 1 bis 5 Anteile eines dazu passenden Schmiermittels wie Polypropylenglykol enthält.

3. Gegenstand aus Kautschuk, der nach Aufbringung des Formmittels gemäß Anspruch 1 oder 2 in einer Form unter Druck vulkanisiert worden ist und in dem 1000 bis 3000 Mikrokugeln des Formmittels pro cm² Oberfläche des mit diesem Formmittel beschichteten Gegenstandes inkrustiert oder oberflächlich absorbiert sind.

**Claims**

1. Agent for coating the surface of rubber objects intended to be vulcanised under pressure, prior to moulding, of the kind comprising a volatile carrier liquid conveying a mineral pigment in suspension with possibly one or more complementary products such as a wetting agent or viscosity regulator, characterised in that the mineral pigment consists of glass microspheroids in the proportion of 5 to 15 parts by weight to 100 parts of volatile carrier, these glass microspheroids having a grain size of 10 to 200 microns.

2. Moulding agent according to claim 1 and furthermore comprising from 1 to 5 parts of compatible lubricant such as polypropylene glycol.

3. Rubber object vulcanised under pressure in a mould after application of the moulding agent according to claim 1 or 2, in which 1000 to 3000 microspheroids of the moulding agent are incrusted or absorbed superficially per square centimetre of surface of the object coated with this moulding agent.